# EUROPEAN PATENT SPECIFICATION

(11) **EP 4 488 975 B1**
(45) Date of publication and mention of the grant of the patent: **14.01.2026**
(21) Application number: 24181518.2
(22) Date of filing: 11.06.2024
(51) Int. Cl.: G08B 25/00, G08B 25/10

(54) **TRANSMISSION OF DATA TO FIRE DEVICES OF A FIRE SYSTEM**
ÜBERTRAGUNG VON DATEN AN BRANDVORRICHTUNGEN EINER BRANDANLAGE
TRANSMISSION DE DONNÉES À DES DISPOSITIFS D'INCENDIE D'UN SYSTÈME D'INCENDIE

(30) Priority: 06.07.2023 US 202318218773
(43) Date of publication of application: 08.01.2025
(73) Proprietor: Honeywell International Inc., Charlotte, NC 28202 (US)
(72) Inventor: GRACIAN, Vimal, Charlotte, 28202 (US); HALKIER, Thomas Steen, Charlotte, 28202 (US); SØRENSEN, Jesper Bundgaard, Charlotte, 28202 (US)
(74) Representative: Haseltine Lake Kempner LLP

(56) References cited:
- US-A1- 2016 352 575
- US-A1- 2021 134 132
- US-B1- 6 366 584
- US-B2- 7 606 144

## Description

### Technical Field

The present disclosure relates to devices, systems, and methods for transmission of data to fire devices of a fire system.

### Background

Facilities, such as commercial facilities, office buildings, hospitals, campuses (e.g., including buildings and outdoor spaces), and the like, may have an alarm system that can be triggered during an event, such as an emergency situation (e.g., a fire) to warn occupants to evacuate. Such an alarm system may include a fire system having a fire panel (e.g., a fire control panel) and a number of fire devices (e.g., sensors, sounders, pull stations, etc.) located throughout the facility (e.g., on different floors and/or in different rooms of the facility) that can perform an action when a hazard event is occurring in the facility and provide a notification of the hazard event to the occupants of the facility via alarms and/or other mechanisms.

US2016352575A1 describes a method for configuring a plurality of network devices of a wireless fire detection system comprising a configuration device, a gateway device wirelessly communicating with the configuration device, and the plurality of network devices communicating with the gateway device. The method comprises determining, by the configuration device, configuration data of each one of the plurality of network devices for configuring each one of the plurality of network devices, transmitting, by the configuration device, the configuration data to the gateway device, and upon receiving the configuration data from the configuration device, distributing, by the gateway device, the configuration data to each one of the plurality of network devices according to predetermined time slots for transmitting the configuration data.

### Summary

The present invention is defined by the independent claims, to which reference should now be made. Advantageous embodiments are set out in the dependent claims.

### Brief Description of the Drawings

Figure 1 is an example of a fire system for transmission of data to fire devices of a fire system, in accordance with one or more embodiments of the present disclosure.
Figure 2 is an example of a cluster arranged in a bi-directional loop for transmission of data to fire devices of a fire system, in accordance with one or more embodiments of the present disclosure.
Figure 3 is an example of a timeslot and channel table for transmission of data to fire devices of a fire system, in accordance with one or more embodiments of the present disclosure.
Figure 4 is an example of a gateway device for transmission of data to fire devices of a fire system, in accordance with one or more embodiments of the present disclosure.

### Detailed Description

Devices, systems, and methods for transmission of data to fire devices of a fire system are described herein. In some examples, one or more embodiments include a gateway device comprising a memory and a processor to execute instructions stored in the memory to receive an activation signal from a fire control panel, and transmit the activation signal to a plurality of fire devices included in a cluster according to predetermined time slots over a plurality of channels, where the plurality of fire devices are arranged in a bi-directional loop such that the activation signal is sent in a first direction around the bi-directional loop and in a second direction around the bi-directional loop simultaneously, and the first direction is opposite the second direction.

A facility can utilize a fire system in order to warn occupants of the facility of an emergency event, such as a fire. As used herein, the term "fire system" refers to a system of devices to provide an audible and/or visible warning in an emergency event. For example, the fire system can utilize fire devices to warn occupants of the emergency event occurring in the space, such as a fire. As used herein, the term "fire device" refers to a device that can receive an input relating to an event and/or generate an output relating to an event. Such fire devices can be a part of the fire system of a space in a facility/in the facility at large and can include devices such as fire sensors, smoke detectors, heat detectors, carbon monoxide (CO) detectors, or combinations of these; interfaces; manual call points (MCPs); pull stations; input/output modules; aspirating units; and/or audio/visual devices (e.g., speakers, sounders, flashers, buzzers, microphones, cameras, video displays, video screens, etc.), relay output modules, among other types of fire devices.

A fire system can transmit data from a control panel to fire devices through a gateway device. Latency may be an issue when such information is transmitted between devices. Latency can be a time delay between transmission of data occurring following an instruction for its transmission.

Fire systems may be deemed to meet certain design requirements defined by various governing standards and/or protocols. Such standards/protocols may be defined based on a jurisdiction in which the fire system is located. One example of such a standard/protocol can be the Underwriters' Laboratories (UL) standards, such as UL Standard 864. One example of a standard/protocol may be a requirement of a 10 second latency for alarm transmissions. In such an example, the standard/protocol may require a fire system to transmit information throughout the fire system in order to activate a fire device within 10 seconds from the time which an emergency event (e.g., a fire) is detected. For example, when a fire is detected (e.g., via a detector of a fire device, via an input to a pull station, etc.), the standard can dictate that a fire device (or some or all of the fire devices in the fire system) must be activated within 10 seconds of the fire being detected. That is, transmission of data from a fire device to a fire control panel (e.g., via a gateway device and/or other fire devices) and vice versa has to be completed within 10 seconds, as per the latency requirement in the standard/protocol.

Certain fire systems may include many fire devices. In some examples, such fire systems may utilize a distributed wireless mesh to connect fire devices with gateway devices and to the fire control panel.

Transmission of data to fire devices of a fire system according to the disclosure can allow for fire devices of a fire system to be arranged in such a way so as to meet certain latency requirements for transmission of data within the fire system. Such an approach can allow for protocols/standards to be met while also providing for fire device synchronization and better fire device redundancy, gateway device redundancy, and communication channel redundancy, as compared with previous approaches.

In the following detailed description, reference is made to the accompanying drawings that form a part hereof. The drawings show by way of illustration how one or more embodiments of the disclosure may be practiced.

These embodiments are described in sufficient detail to enable those of ordinary skill in the art to practice one or more embodiments of this disclosure. It is to be understood that other embodiments may be utilized and that process, electrical, and/or structural changes may be made without departing from the scope of the present disclosure.

As will be appreciated, elements shown in the various embodiments herein can be added, exchanged, combined, and/or eliminated so as to provide a number of additional embodiments of the present disclosure. The proportion and the relative scale of the elements provided in the figures are intended to illustrate the embodiments of the present disclosure and should not be taken in a limiting sense.

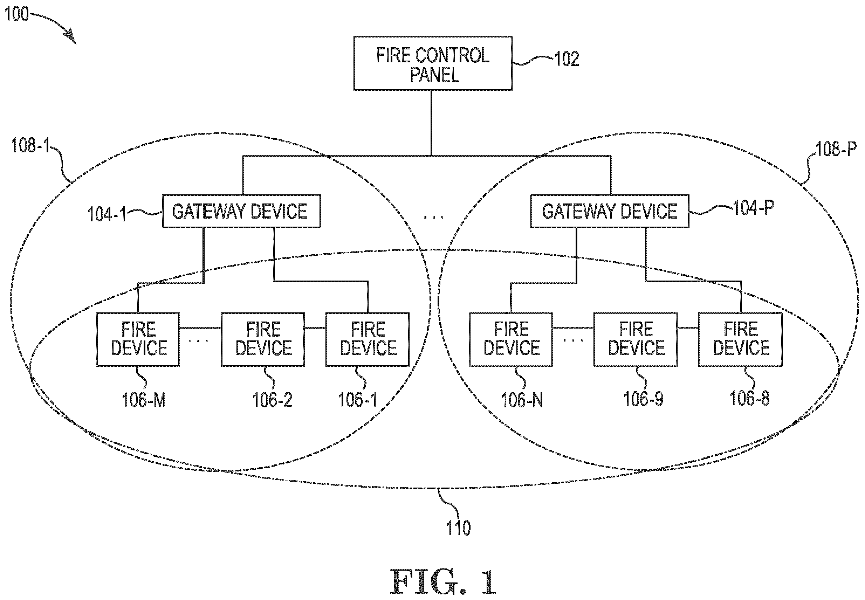

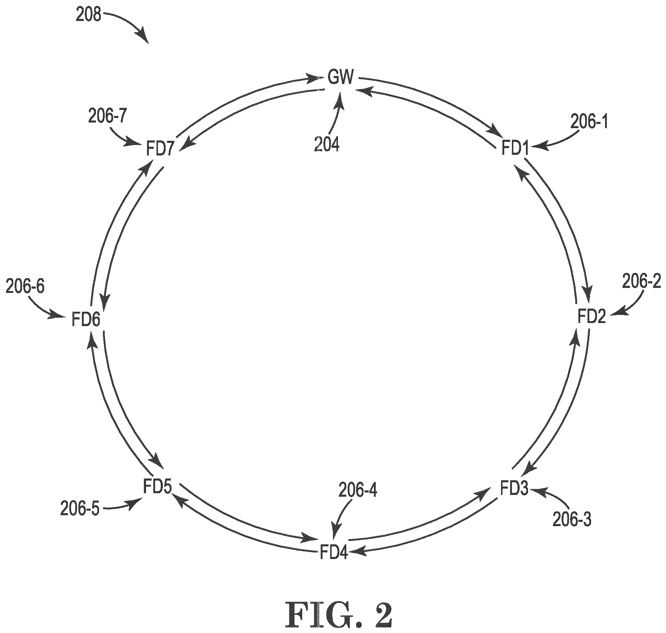

The figures herein follow a numbering convention in which the first digit or digits correspond to the drawing figure number and the remaining digits identify an element or component in the drawing. Similar elements or components between different figures may be identified by the use of similar digits. For example, 104 may reference element "04" in Figure 1, and a similar element may be referenced as 204 in Figure 2.

As used herein, "a", "an", or "a number of" something can refer to one or more such things, while "a plurality of" something can refer to more than one such things. For example, "a number of components" can refer to one or more components, while "a plurality of components" can refer to more than one component.

Figure 1 is an example of a fire system 100 for transmission of data to fire devices 104 of a fire system 100, in accordance with one or more embodiments of the present disclosure. The fire system 100 can include a fire control panel 102, gateway devices 104-1, 104-P, and fire devices 106-1, 106-2, 106-M, 106-8, 106-9, 106-N.

As mentioned above, the fire system 100 can be included in a facility, a space in a facility, etc. The fire system 100 can include a device/series of devices in order to detect events and/or process and/or analyze the detected events to determine whether to generate an alarm for occupants of the facility.

The fire system 100 can include fire devices 106-1, 106-2, 106-M, 106-8, 106-9, 106-N (referred to collectively as fire devices 106). The fire devices 106 can be devices to detect an event and transmit the detected event for processing and/or analysis. As mentioned above, the fire devices 106 can include, for example, cameras, motion sensors, fire sensors, smoke detectors, heat detectors, carbon monoxide (CO) detectors, or combinations of these; interfaces; manual call points (MCPs); pull stations; input/output modules; aspirating units; sprinkler controls; and/or audio/visual devices (e.g., speakers, microphones, cameras, video displays, video screens, etc.), relay output modules, among other types of event devices.

The fire system 100 further includes a fire control panel 102. The fire control panel 102 can be utilized to control the various fire devices 106 included in the fire system 100.

The fire control panel 102 can be connected to the fire devices 106. For example, the fire control panel 102 may be connected to the fire devices 106 via gateway devices 104-1, 104-P (referred to collectively as gateway devices 104). The gateway devices 104 can be devices (e.g., a building system gateway) that provides a communication link between the fire control panel 102 and fire devices 106, as well as any peripheral devices that may be included in the fire system 100 (e.g., not illustrated in Figure 1). For example, the gateway devices 104 can enable transmission of data (e.g., fire system device data, activation signals, etc.) from the fire control panel 102 to the fire devices 106 and transmission of data from the fire devices 106 to the fire control panel 102.

As illustrated in Figure 1, the fire devices 106 and gateway devices 104 are connected to the fire control panel 102. The fire devices 106 and gateway devices 104 are connected to the fire control panel 102 via a wireless network relationship. Examples of such a network relationship can include a local area network (LAN), wide area network (WAN), personal area network (PAN), a distributed computing environment (e.g., a cloud computing environment), storage area network (SAN), Metropolitan area network (MAN), a cellular communications network, Long Term Evolution (LTE), visible light communication (VLC), Bluetooth, Worldwide Interoperability for Microwave Access (WiMAX), Near Field Communication (NFC), infrared (IR) communication, Public Switched Telephone Network (PSTN), radio waves, and/or the Internet, among other types of network relationships.

As mentioned above, at least the fire devices 106 and gateway devices 104 are connected via a distributed wireless mesh. The fire devices 106 can be arranged in a mesh 110. Further, the gateway devices 104 and fire devices 106 can be arranged in clusters 108. For example, gateway device 104-1 can be connected to fire devices 106-1, 106-2, and 106-M and be arranged in a cluster 108-1, and gateway device 104-P can be connected to fire device 106-8, 106-9, 106-N and be arranged in a cluster 108-P, etc. Further, the fire devices 106-1, 106-2, 106-M, 106-8, 106-9, 106-N can be connected in a mesh 110. Such an arrangement of devices allows for transmission of data to fire devices within the fire system 100 that meets latency requirements for various standards/protocols, as is further described herein. Additionally, when such a fire system 100 is created, the clusters 108-1, 108-P and mesh 110 can be generated, as is further described herein.

When the fire devices 106 are powered on, each of the fire devices 106 can connect to a neighboring fire device 106. For example, fire device 106-1 can connect to neighboring fire device 106-2, etc. Such connections can be made via predetermined mesh identifiers included in each fire device 106 of the fire devices 106. For example, fire device 106-1 can include a predetermined mesh identifier including a unique profile having a unique identifier (e.g., internet protocol (IP) address, Media Access Control (MAC) address, etc.) and network keys. Fire device 106-2 can include similar predetermined mesh identifier information that is unique to fire device 106-2, etc. Each fire device 106 of the fire devices 106 can connect to neighboring fire devices 106 when the fire devices 106 are powered on. Accordingly, each of the fire devices 106 can connect to neighboring fire devices 106 in response to being powered on via the predetermined mesh identifiers included in each of the fire devices 106 to generate the mesh 110.

As is further described herein, a gateway device 104 can generate a cluster 108. While the example described below illustrates generation of the cluster 108-1 via gateway device 104-1, the gateway device 104-P can generate cluster 108-P in a similar manner.

The gateway device 104-1 can generate the cluster 108-1 by receiving signal strengths of neighboring fire devices 106 for each fire device of the plurality of fire devices 106. For example, the fire device 106-1 can transmit a signal strength with the fire device 106-2 to the gateway device 104-1, the fire device 106-2 can transmit a signal strength with fire devices 106-1 and 106-M to gateway device 104-1, fire device 106-M can transmit a signal strength with fire device 106-2 to the gateway device 104-1, etc. Such signal strength can be, for example, Received Signal Strength Indicator (RSSI) values. Such information can be transmitted to the gateway device 104-1 in response to receiving (e.g., by each fire device 106-1, 106-2, 106-M) a signal strength query from the gateway device 104-1. Each fire device 106-1, 106-2, 106-M can align to the cluster 108-1 via a predetermined network key included in each fire device 106-1, 106-2, 106-M.

Once the gateway device 104-1 includes signal strength information of the neighboring fire devices for each fire device1 06-1, 106-2, 106-M of the fire devices 106, the gateway device 104-1 determines a best possible neighbor for each fire device 106-1, 106-2, 106-M of the fire devices 106 based on the signal strengths. In order to determine the best possible neighbor for each fire device 106-1, 106-2, 106-M of the fire devices 106, the gateway device 104-1 can determine a suboptimal shortest path through the fire devices 106-1, 106-2, 106-M in the cluster 108-1 via simulated annealing. Simulated annealing can include a probabilistic technique for approximating a global optimum of a given function for an optimization problem. The gateway device 104-1 can utilize the signal strengths of the neighboring fire devices 106 for each fire device 106-1, 106-2, 106-M to find the best possible neighbor for each fire device 106-1, 106-2, 106-M via the simulated annealing algorithm.

The suboptimal shortest path through the fire devices 106-1, 106-2, 106-M determined via simulated annealing can be a Hamiltonian path. The Hamiltonian path (e.g., a traceable path) can be a path through a graph of nodes which visits each node exactly once. Such a path is generated that defines a bi-directional loop of fire devices 106 in the cluster 108-1. For instance, in the example illustrated in Figure 1, the cluster 108-1 can include a bi-directional loop of fire devices 106 that is organized such that the gateway device 104-1 is located one space to the right (e.g., counterclockwise (CCW) from fire device 106-1), fire device 106-2 is located to the right (e.g., CCW) from fire devices 106-1, and fire device 106-M is located to the right (e.g., CCW) from fire device 106-2 and to the left (e.g., CW) from gateway device 104-1. Such a bi-directional loop is further illustrated and described in connection with Figure 2.

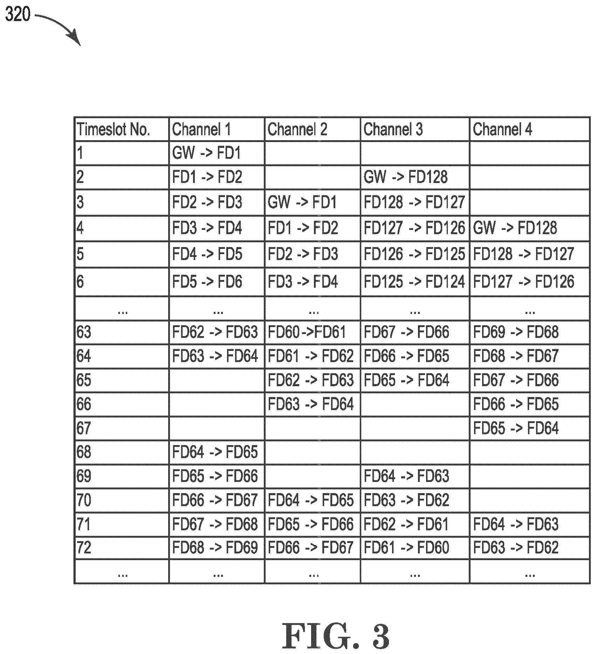

Once the bi-directional loop is generated, the gateway device 104-1 can allocate predetermined timeslots over a various channels for each fire device 106-1, 106-2, 106-M based on a position of the gateway device 104-1 with respect to the bi-directional loop. For example, the gateway device 104-1 can get the first time slot, fire device 106-1 can get the second time slot, fire device 106-2 can get the third time slot, and fire device 106-M can get the "M'th" time slot. Additionally, each fire device 106-1, 106-2, 106-M can utilize four communication channels for transmission of data through the bi-directional loop of the cluster 108-1 so that each fire device 106-1, 106-2, 106-M can make four consecutive transmissions over four allocated channels, as is further described in connection with Figure 3.

While the clusters 108-1 and 108-P are illustrated in Figure 1 as including three fire devices 106-1, 106-2, 106-M and 106-8, 106-9, 106-N, respectively, embodiments of the present disclosure are not so limited. For example, clusters 108-1 and 108-P may include more than three fire devices 106 or less than three fire devices 106. Further, cluster 108-1 may include the same amount of fire devices 106 as cluster 108-P or a different amount of fire devices 106 than cluster 108-P (e.g., more or less). Moreover, while the fire system 100 illustrates two clusters 108-1, 108-P, embodiments of the present disclosure are not so limited. For example, the fire system 100 can include more than two clusters 108.

With the clusters 108-1, 108-P, and the mesh 110 generated, the fire system 100 can transmit data. Such data can be transmitted from the fire devices 106 to the fire control panel 102 via the gateway devices 104 and vice versa, as is further described herein.

During operation of the fire system 100, the gateway device 104-1 can be polling each of the fire devices 106-1, 106-2, 106-M of the cluster 108-1 for fire activation data (e.g., detection of an event in the facility, such as smoke detection, heat detection, pull station activation, etc. by the fire devices 106-1, 106-2, 106-M) in two directions simultaneously (e.g., both CW and CCW around the bi-directional loop of fire devices 106-1, 106-2, 106-M). Each direction can be polled twice on two separate channels. Such a polling process is further described herein with respect to transmission of activation data from the fire control panel 102 to the fire devices 106, but the process works similar for transmission of fire activation data transmitted from the fire devices 106 to the fire control panel 102. Additionally, while the example described herein relates to operation of the gateway device 104-1 within the cluster 108-1, the gateway device 104-P within the cluster 108-P can operate in a similar manner.

As mentioned above, when an event is detected in the facility, the fire control panel 102 can determine whether to activate a fire device 106 in the fire system 100. For example, the fire control panel 102 can receive fire activation data from a fire device 106 (e.g., via a gateway device 104), such as a signal from a pull station, smoke data, heat data, etc. Based on the received activation data, the fire control panel 102 can determine whether a fire event is occurring from the fire device activation data. In response to the fire control panel 102 determining a fire event is occurring from the fire device activation data, the fire control panel 102 can transmit an activation signal to the fire devices 106, as is further described herein.

As previously mentioned above, the fire devices 106-1, 106-2, 106-M can be arranged in a bi-directional loop within the cluster 108-1. Upon determination by the fire control panel 102 that an event is occurring in the facility, the fire control panel 102 can transmit an activation signal to the gateway device 104-1. The gateway device 104-1 can receive the activation signal from the fire control panel 102 and transmit the activation signal to the fire devices 106-1, 106-2, 106-M via the bi-directional loop, as is further described herein.

For example, the gateway device 104-1 can transmit the activation signal in a first direction (e.g., CW) around the bi-directional loop by transmitting the activation signal to the fire device 106-1; the fire device 106-1 can then transmit the activation signal to the fire device 106-2, and finally the fire device 106-2 can transmit the activation signal to the fire device 106-M. Simultaneously, the gateway device 104-1 can transmit the activation signal in a second direction (e.g., CCW) that is opposite the first direction around the bi-directional loop by transmitting the activation signal to the fire device 106-M; the fire device 106-M can then transmit the activation signal to the fire device 106-2, and finally the fire device 106-2 can transmit the activation signal to the fire device 106-1. Such transmissions can occur over sets of predetermined time slots over a plurality of channels, as is further described in connection with Figure 3.

Since the gateway device 104-1 transmits the activation signal simultaneously around the bi-directional loop in opposite directions, if a fire device 106 is not operational, such an activation signal can still reach other fire devices in the bi-directional loop. For example, if fire device 106-2 experiences a problem and is not operational, the activation signal sent CW around the bi-directional loop can reach fire device 106-1 but not fire device 106-M. However, the activation signal sent CCW around the bi-directional loop can reach fire device 106-M. Accordingly, such an approach can provide for fire device redundancy to ensure signals are sent to and/or received from fire devices in the bi-directional loop, even if a fire device is not active.

As illustrated in Figure 1, each gateway device 104 includes a bi-directional loop in each respective cluster 108. Each gateway device 104 can include a loop timing amount to complete a transmission around the fire devices 106 in the bi-directional loop. For example, gateway device 104-1 can include a 250 millisecond (ms) interval to complete transmission of information around the bi-directional loop of fire devices 106-1, 106-2, 106-M at four transmissions per device in four different channels. The gateway devices 104-1, 104-P can be aligned in a global timing scheme. For example, the first gateway device 104-1 can transmit the activation signal to the fire devices 106-1, 106-, 106-M at a first predetermined time, and the second gateway device 104-P can transmit the activation signal to the fire devices 106-8, 106-9, 106-N at a second predetermined time that is after the first predetermined time. For example, the gateway device 104-P can transmit the activation signal to the fire devices 106-8, 106-9, 106-N 250 ms after the gateway device 104-1 transmits the activation signal to the fire devices 106-1, 106-2, 106-M. In other words, the transmission of signals to and/or from the bi-directional loops can be staggered.

Upon receiving an activation signal, a fire device 106 of the fire devices can activate itself. For example, fire devices 106-1, 106-2, 106-M may activate in response to receiving the activation signal. Activation of the fire devices 106 may include activating a visual alarm (e.g., emitting lights) and/or an audible alarm (e.g., emitting an audible sound).

Within the mesh 110, a fire device of the fire devices 106 can be a synchronization fire device. For example, the fire device 106-8 can be a synchronization fire device in order to synchronize alarm emissions. The synchronization fire device can include synchronization information including a synchronization start time, an amount of hops across the mesh of fire devices 106 (e.g., the number of nodes within the mesh 110/the total number of fire devices 106 within the mesh 110), and a predetermined drift amount (e.g., clock drift). The fire device 106-8 can synchronize the remaining fire devices 106 in the mesh 110 by transmitting the synchronization information to each of the fire devices 106. For example, the fire device 106-8 can determine that if there are ten fire devices 106 at 30.5 microseconds drift per device, based on a distribution of the drift, an average synchronization amount of 3.5 ms can be transmitted to each of the fire devices 106 for synchronization.

As mentioned above, while transmission of an activation signal to the fire devices 106 from the fire control panel 102 is described above, the same process can be utilized to poll each of the fire devices 106 for fire activation data for transmission to the fire control panel 102. Transmission of such information around a bi-directional loop is further described in connection with Figure 2.

Figure 2 is an example of a cluster 208 arranged in a bi-directional loop for transmission of data to fire devices 206 of a fire system, in accordance with one or more embodiments of the present disclosure. The bi-directional loop can include a loop of fire devices 206-1, 206-2, 206-3, 206-4, 206-5, 206-6, 206-7, and a gateway device 204.

As illustrated in Figure 2, the fire devices 206 can be arranged in a bi-directional loop such that the form a traceable path. Such a traceable path can be a Hamiltonian path, as previously described in connection with Figure 1.

The gateway device 204 polls information from (e.g., fire activation data) and/or transmits information to (e.g., an activation signal) the fire devices 206 in multiple directions simultaneously. The gateway device transmits an activation signal to the fire devices 206 by transmitting the activation signal to fire device 206-1 in a first direction (e.g., CW) and to fire device 206-7 in a second direction (e.g., CCW).

Transmitting the activation signal to the fire device 206-1 in the first direction causes the fire device 206-1 to transmit the activation signal to the fire device 206-2. Continuing with this direction, transmitting the activation signal to the fire device 206-2 in the first direction causes the fire device 206-2 to transmit the activation signal to the fire device 206-3, the activation signal to the fire device 206-3 in the first direction causes the fire device 206-3 to transmit the activation signal to the fire device 206-4, the activation signal to the fire device 206-4 in the first direction causes the fire device 206-4 to transmit the activation signal to the fire device 206-5, the activation signal to the fire device 206-5 in the first direction causes the fire device 206-5 to transmit the activation signal to the fire device 206-6, and lastly, the activation signal to the fire device 206-6 in the first direction causes the fire device 206-6 to transmit the activation signal to the fire device 206-7.

Similarly, transmitting the activation signal to the fire device 206-7 in the second direction causes the fire device 206-7 to transmit the activation signal to the fire device 206-6. Continuing with this direction, transmitting the activation signal to the fire device 206-6 in the second direction causes the fire device 206-6 to transmit the activation signal to the fire device 206-5, the activation signal to the fire device 206-5 in the second direction causes the fire device 206-5 to transmit the activation signal to the fire device 206-4, the activation signal to the fire device 206-4 in the second direction causes the fire device 206-4 to transmit the activation signal to the fire device 206-3, the activation signal to the fire device 206-3 in the second direction causes the fire device 206-3 to transmit the activation signal to the fire device 206-2, and lastly, the activation signal to the fire device 206-2 in the second direction causes the fire device 206-2 to transmit the activation signal to the fire device 206-1.

As mentioned above, the signal can be sent four times around the bi-directional loop in multiple channels. Such an approach can prevent interference from preventing signals from transiting all the way through the bi-directional loop, as is further described in connection with Figure 3.

Figure 3 is an example of a timeslot and channel table 320 for transmission of data to fire devices of a fire system, in accordance with one or more embodiments of the present disclosure. The timeslot and channel table 320 may be utilized to poll information from (e.g., fire activation data) and/or transmit information to (e.g., an activation signal) fire devices in multiple directions simultaneously around a bi-directional loop.

Each fire device can include transmit and receive timeslots allocated according to the timeslot and channel table 320. As illustrated in the timeslot and channel table 320, the bi-directional loop can include 128 fire devices. While the timeslot and channel table 320 is illustrated as including 72 timeslots, based on the 128 fire devices, the timeslot and channel table 320 can include 134 timeslots to allow for polling and transmission of data for each of the 128 fire devices, as is further described herein.

As previously mentioned above, polling and/or transmission of data can be performed at four transmissions per device in four different channels. For example, an activation signal can transmitted in a staggered manner of the four channels by transmitting a first activation signal in a first direction over a first channel (channel 1) at a first timeslot (timeslot 1). For instance, the gateway device (e.g., GW as illustrated in the timeslot and channel table 320) can transmit the activation signal to the first fire device (e.g., FD1 as illustrated in the timeslot and channel table 320) in the first channel in the first timeslot. At timeslot 2, FD1 can transmit the activation signal in the first direction to FD2 in channel 1, and GW can transmit the activation signal in the second direction to FD1 in channel 3. No transmissions may occur in channels 2-4 in timeslot 1 or in channels 2 and 4 in timeslot 2. At timeslot 3, FD2 can transmit the activation signal in the first direction to FD3 in channel 1, GW can transmit the activation signal in the first direction to FD1 in channel 2, and FD 128 can transmit the activation signal in the second direction to FD127 in the second direction in channel 3. At timeslot 4, FD3 can transmit the activation signal in the first direction to FD4 in channel 1, FD1 can transmit the activation signal in the first direction to FD2 in channel 2, FD127 can transmit the activation signal in the second direction to FD126 in channel 3, and GW can transmit the activation signal in the second direction to FD128 in channel 4.

Such a process can continue through all of the timeslots so that the loop is interrogated and/or data is transmitted through the loop in both directions (e.g., CW and CCW) simultaneously. For instance, each direction can be interrogated and/or transmit data twice on two separate channels. Such an approach can improve immunity to noise (e.g., single narrowband high-power blocking). For example, if another device may be transmitting data over a frequency that is close to channels 1, 2, 3, or 4, such transmission may result in noise affecting interrogation and/or transmission of data through the bi-directional loop. However, such an approach as described above can allow for interrogation and/or transmission of data to reach all of the fire devices in the bi-directional loop, as a failure of a fire device results in messages that can still be received who are prior to the failed fire device in the bi-directional loop. Further, interleaving can be done to avoid a single fire device having to transmit and receive at the same time.

As illustrated in the timeslot and channel table 320, four channels can be utilized that may be at different frequencies. For example, the first channel can be at a first frequency (e.g., 2412 Megahertz (MHz)) and the third channel can be at a third frequency (e.g., 2417 MHz) that is proximate to the first frequency. Additionally, the second channel can be at a second frequency (e.g., 2462 MHz) and the fourth channel can be at a fourth frequency (e.g., 2467 MHz) that is proximate to the second frequency. The first frequency and third frequency can be spaced apart from the second frequency and fourth frequency in a frequency band. Spacing apart the frequencies in a particular frequency band can prevent another device outside of the fire system which may be transmitting from blocking all of the channels simultaneously.

The gateway device can further listen to time slots based on signal strengths of its available neighboring fire devices. The gateway can include primary receive slots of its immediate neighboring fire devices, but in addition, can listen to fire devices that are not primary neighbors but are within range of the neighboring fire devices. Such an approach can allow the gateway device redundancy. Further, each fire device has a listen slot of its immediate neighboring fire device, and in addition can listen to additional devices based on the neighboring fire device availability. The distribution of the listening slots can be such that the fire device can listen to two channels of a given fire device and an additional two channels of another fire device. Lastly, as mentioned above, the fire devices are allocated four channels for transmissions. These channels can be monitored for packet error rate (PER) at a particular frequency (e.g., every two seconds). If a channel PER exhibits a high rate of PER (e.g., exceeds a PER threshold), the fire devices can be switched to a redundant channel.

Accordingly, transmission of data to fire devices of a fire system according to the disclosure can allow for fire devices of a fire system to be arranged in such a way so as to meet latency requirements for transmission of data within the fire system while also providing for fire device synchronization and fire device redundancy in the case in which a fire device becomes inoperable. Further, such an approach can allow for gateway device redundancy and communication channel redundancy so that fire devices are reliably activated in the case of an emergency event in order to warn occupants of a facility of such an emergency event.

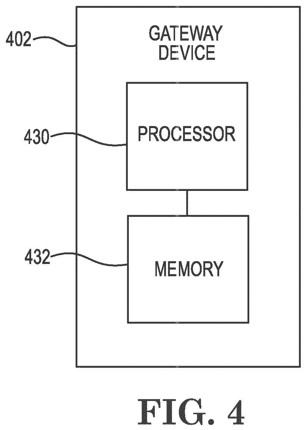

Figure 4 is an example of a gateway device 402 for transmission of data to fire devices of a fire system, in accordance with one or more embodiments of the present disclosure. As illustrated in Figure 4, the gateway device 402 can include a memory 432 and a processor 430 for transmission of data to fire devices of a fire system, in accordance with the present disclosure.

The memory 432 can be any type of storage medium that can be accessed by the processor 430 to perform various examples of the present disclosure. For example, the memory 432 can be a non-transitory computer readable medium having computer readable instructions (e.g., executable instructions/computer program instructions) stored thereon that are executable by the processor 430 for transmission of data to fire devices of a fire system in accordance with the present disclosure.

The memory 432 can be volatile or nonvolatile memory. The memory 432 can also be removable (e.g., portable) memory, or non-removable (e.g., internal) memory. For example, the memory 432 can be random access memory (RAM) (e.g., dynamic random access memory (DRAM) and/or phase change random access memory (PCRAM)), read-only memory (ROM) (e.g., electrically erasable programmable read-only memory (EEPROM) and/or compact-disc read-only memory (CD-ROM)), flash memory, a laser disc, a digital versatile disc (DVD) or other optical storage, and/or a magnetic medium such as magnetic cassettes, tapes, or disks, among other types of memory.

Further, although memory 432 is illustrated as being located within gateway device 402, embodiments of the present disclosure are not so limited. For example, memory 432 can also be located internal to another computing resource (e.g., enabling computer readable instructions to be downloaded over the Internet or another wired or wireless connection).

The processor 430 may be a central processing unit (CPU), a semiconductor-based microprocessor, and/or other hardware devices suitable for retrieval and execution of machine-readable instructions stored in the memory 432.

Although specific embodiments have been illustrated and described herein, those of ordinary skill in the art will appreciate that any arrangement calculated to achieve the same techniques can be substituted for the specific embodiments shown. This disclosure is intended to cover any and all adaptations or variations of various embodiments of the disclosure.

It is to be understood that the above description has been made in an illustrative fashion, and not a restrictive one. Combination of the above embodiments, and other embodiments not specifically described herein will be apparent to those of skill in the art upon reviewing the above description.

The scope of the various embodiments of the disclosure includes any other applications in which the above structures and methods are used. Therefore, the scope of various embodiments of the disclosure should be determined with reference to the appended claims, along with the full range of equivalents to which such claims are entitled.

In the foregoing Detailed Description, various features are grouped together in example embodiments illustrated in the figures for the purpose of streamlining the disclosure. This method of disclosure is not to be interpreted as reflecting an intention that the embodiments of the disclosure require more features than are expressly recited in each claim.

## Claims

1. A gateway device (104, 204, 402) for transmission of data to fire devices (106, 206) of a fire system (100), comprising:
a memory (432); and
a processor (430) configured to execute executable instructions stored in the memory (432) to:
generate a cluster (108, 208) including a bi-directional loop of fire devices (106, 206) from a plurality of fire devices (106, 206) included in a mesh (110) by:
receiving signal strengths of neighboring fire devices (106,206) for each fire device (106, 206) of the plurality of fire devices (106, 206);
determining a best possible neighbor for each fire device (106, 206) of the plurality of fire devices (106, 206) based on the signal strengths; and
generate a path defining the bi-directional loop;
receive an activation signal from a fire control panel (102); and
wirelessly transmit the activation signal to the plurality of fire devices (106, 206) included in the cluster (108, 208) according to predetermined time slots over a plurality of channels;
wherein:
the activation signal is simultaneously sent:
in a first direction from the gateway device (104, 204, 404) through the path around the bi-directional loop; and
in a second direction from the gateway device (104, 204, 404) through the path around the bi-directional loop; and
the first direction is opposite the second direction.

2. The gateway device (104, 204, 402) of claim 1, wherein the processor (430) is configured to stagger transmission of the activation signal over the plurality of channels by:
transmitting the activation signal in the first direction over a first channel at a first timeslot;
transmitting the activation signal in the second direction over a third channel at a second timeslot;
transmitting the activation signal in the first direction over a second channel at a third timeslot; and
transmitting the activation signal in the second direction over a fourth channel at a fourth timeslot.

3. The gateway device (104, 204, 402) of claim 2, wherein:
the first channel is at a first frequency and the third channel is at a third frequency that is proximate to the first frequency; and
the second channel is at a second frequency and the fourth channel is at a fourth frequency that is proximate to the second frequency.

4. The gateway device (104, 204, 402) of claim 3, wherein the first frequency and the third frequency are spaced apart from the second frequency and the fourth frequency in a frequency band.

5. The gateway device (104, 204, 402) of claim 1, wherein the processor (430) is configured to:
receive fire device activation data from a fire device (106, 206) of the plurality of fire devices (106, 206);
transmit the fire device activation data to the fire control panel (102); and
receive the activation signal from the fire control panel (102) in response to the fire control panel (102) determining a fire event is occurring from the fire device activation data.

6. The gateway device (104, 204, 402) of claim 1, wherein the processor (430) is configured to cause at least one fire device (106, 206) of the plurality of fire devices (106, 206) to activate via the activation signal.

7. The gateway device (104, 204, 402) of claim 1, wherein the processor (430) is configured to transmit the activation signal to the plurality of fire devices (106, 206) by transmitting the activation signal to a first fire device (106, 206) of the plurality of fire devices (106, 206) in the first direction and a third fire device (106, 206) of the plurality of fire devices (106, 206) in the second direction.

8. The gateway device (104, 204, 402) of claim 7, wherein:
transmitting the activation signal to the first fire device (106, 206) in the first direction causes the first fire device (106, 206) to transmit the activation signal to a second fire device (106, 206) of the plurality of fire devices (106, 206) and the second fire device (106, 206) to transmit the activation signal to the third fire device (106, 206) in the first direction around the bi-directional loop; and
transmitting the activation signal to the third fire device (106, 206) in the second direction causes the third fire device (106, 206) to transmit the activation signal to the second fire device (106, 206) and the second fire device (106, 206) to transmit the activation signal to the first fire device (106, 206) in the second direction around the bi-directional loop.

9. A method for transmission of data to fire devices (106, 206) of a fire system (100), comprising:
generating, by a gateway device (104, 204, 402), a cluster (108, 208) including a bi-directional loop of fire devices (106, 206) from a plurality of fire devices (106, 206) included in a mesh (110) by:
receiving signal strengths of neighboring fire devices (106, 206) for each fire device (106, 206) of the plurality of fire devices (106, 206);
determining a best possible neighbor for each fire device (106, 206) of the plurality of fire devices (106, 206) based on the signal strengths;
generating a path defining the bi-directional loop; and
allocating predetermined timeslots over a plurality of channels for each fire device (106, 206) of the plurality of fire devices (106, 206) based on a position of the gateway device (104, 204, 402) with respect to the bi-directional loop;
receiving, by the gateway device (104, 204, 402) from a fire control panel (102), an activation signal;
simultaneously wirelessly transmitting, according to predetermined time slots over the plurality of channels by the gateway device (104, 204, 402), the activation signal to the plurality of fire devices (106, 206):
in a first direction from the gateway device (104, 204, 404) through the path around the bi-directional loop; and
in a second direction from the gateway device (104, 204, 404) through the path around the bi-directional loop; and
causing, by the activation signal, activation of at least one fire device (106, 206) of the plurality of fire devices (106, 206).

10. The method of claim 9, wherein determining the best possible neighbor includes determining a suboptimal shortest path through the plurality of fire devices (106, 206) in the cluster (108, 208) via simulated annealing, wherein the suboptimal shortest path is the path.

11. The method of claim 10, wherein the suboptimal shortest path is a Hamiltonian path defining the bi-directional loop.

12. The method of claim 9, wherein the method further includes generating the mesh (110) by connecting, by each fire device (106, 206) of the plurality of fire devices (106, 206), to a neighbor fire device (106, 206) in response to being powered on via predetermined mesh (110) identifiers included in each fire device (106, 206) of the plurality of fire devices (106, 206).

13. The method of claim 12, wherein generating the mesh (110) further includes aligning, by each fire device (106, 206) of the plurality of fire devices (106, 206), to the cluster (108, 208) via a predetermined network key included in each fire device (106, 206) of the plurality of fire devices (106, 206).

14. The method of claim 9, wherein causing the activation of the at least one fire device (106, 206) includes activating a visual alarm.

15. The method of claim 9, wherein causing the activation of the at least one fire device (106, 206) includes activating an audible alarm.

## Patentansprüche

1. Gateway-Vorrichtung (104, 204, 402) zum Senden von Daten an Brandschutzvorrichtungen (106, 206) eines Brandmeldesystems (100), umfassend:
einen Speicher (432); und
einen Prozessor (430), der dazu konfiguriert ist, im Speicher (432) gespeicherte ausführbare Anweisungen auszuführen, um:
einen Cluster (108, 208) zu erzeugen, der eine bidirektionale Schleife von Brandschutzvorrichtungen (106, 206) aus einer Vielzahl von Brandschutzvorrichtungen (106, 206) einschließt, die in einem Netz (110) eingeschlossen sind, durch:
Empfangen von Signalstärken benachbarter Brandschutzvorrichtungen (106, 206) für jede Brandschutzvorrichtung (106, 206) der Vielzahl von Brandschutzvorrichtungen (106, 206);
Bestimmen eines bestmöglichen Nachbarn für jede Brandschutzvorrichtung (106, 206) der Vielzahl von Brandschutzvorrichtungen (106, 206) basierend auf den Signalstärken; und
Erzeugen eines Pfades, der die bidirektionale Schleife definiert;
Empfangen eines Aktivierungssignals von einer Brandmeldezentrale (102); und
drahtloses Senden des Aktivierungssignals an die Vielzahl von Brandschutzvorrichtungen (106, 206), die in dem Cluster (108, 208) eingeschlossen sind, entsprechend vorgegebenen Zeitfenstern über eine Vielzahl von Kanälen;
wobei:
das Aktivierungssignal gleichzeitig gesendet wird:
in einer ersten Richtung von der Gateway-Vorrichtung (104, 204, 404) über den Pfad rund um die bidirektionale Schleife; und
in einer zweiten Richtung von der Gateway-Vorrichtung (104, 204, 404) über den Pfad rund um die bidirektionale Schleife; und
wobei die erste Richtung entgegengesetzt zur zweiten Richtung ist.

2. Gateway-Vorrichtung (104, 204, 402) nach Anspruch 1, wobei der Prozessor (430) so konfiguriert ist, dass er das Senden des Aktivierungssignals über die Vielzahl der Kanäle staffelt durch:
Senden des Aktivierungssignals in der ersten Richtung über einen ersten Kanal in einem ersten Zeitfenster;
Senden des Aktivierungssignals in der zweiten Richtung über einen dritten Kanal in einem zweiten Zeitfenster;
Senden des Aktivierungssignals in der ersten Richtung über einen zweiten Kanal in einem dritten Zeitfenster; und
Senden des Aktivierungssignals in der zweiten Richtung über einen vierten Kanal in einem vierten Zeitfenster.

3. Gateway Vorrichtung (104, 204, 402) nach Anspruch 2, wobei:
der erste Kanal auf einer ersten Frequenz und der dritte Kanal auf einer dritten Frequenz, die nahe der ersten Frequenz ist, liegt; und
der zweite Kanal auf einer zweiten Frequenz und der vierte Kanal auf einer vierten Frequenz, die nahe der zweiten Frequenz ist, liegt.

4. Gateway-Vorrichtung (104, 204, 402) nach Anspruch 3, wobei die erste Frequenz und die dritte Frequenz voneinander beabstandet von der zweiten Frequenz und der vierten Frequenz in einem Frequenzband sind.

5. Gateway-Vorrichtung (104, 204, 402) nach Anspruch 1, wobei der Prozessor (430) konfiguriert ist, um:
Brandschutzvorrichtungsaktivierungsdaten von einer Brandschutzvorrichtung (106, 206) aus der Vielzahl von Brandschutzvorrichtungen (106, 206) zu empfangen;
Brandschutzvorrichtungsaktivierungsdaten an die Brandmeldezentrale (102) zu senden; und
das Aktivierungssignal von der Brandmeldezentrale (102) als Antwort darauf zu empfangen, dass die Brandmeldezentrale (102) aus den Brandschutzvorrichtungsaktivierungsdaten bestimmt, dass ein Brandereignis aufgetreten ist.

6. Gateway-Vorrichtung (104, 204, 402) nach Anspruch 1, wobei der Prozessor (430) so konfiguriert ist, dass er bewirkt, dass mindestens eine Brandschutzvorrichtung (106, 206) aus der Vielzahl von Brandschutzvorrichtungen (106, 206) über das Aktivierungssignal aktiviert wird.

7. Gateway-Vorrichtung (104, 204, 402) nach Anspruch 1, wobei der Prozessor (430) so konfiguriert ist, dass er das Aktivierungssignal an die Vielzahl der Brandschutzvorrichtungen (106, 206) durch Senden des Aktivierungssignals an eine erste Brandschutzvorrichtung (106, 206) der Vielzahl der Brandschutzvorrichtungen (106, 206) in der ersten Richtung und an eine dritte Brandschutzvorrichtung (106, 206) der Vielzahl der Brandschutzvorrichtungen (106, 206) in der zweiten Richtung sendet.

8. Gateway-Vorrichtung (104, 204, 402) nach Anspruch 7, wobei:
das Senden des Aktivierungssignals an die erste Brandschutzvorrichtung (106, 206) in der ersten Richtung bewirkt, dass die erste Brandschutzvorrichtung (106, 206) das Aktivierungssignal an eine zweite Brandschutzvorrichtung (106, 206) der Vielzahl der Brandschutzvorrichtungen (106, 206) sendet und die zweite Brandschutzvorrichtung (106, 206) das Aktivierungssignal an die dritte Brandschutzvorrichtung (106, 206) in der ersten Richtung rund um die bidirektionale Schleife sendet; und
das Senden des Aktivierungssignals an die dritte Brandschutzvorrichtung (106, 206) in der zweiten Richtung bewirkt, dass die dritte Brandschutzvorrichtung (106, 206) das Aktivierungssignal an die zweite Brandschutzvorrichtung (106, 206) sendet und die zweite Brandschutzvorrichtung (106, 206) das Aktivierungssignal an die erste Brandschutzvorrichtung (106, 206) in der zweiten Richtung rund um die bidirektionale Schleife sendet.

9. Verfahren zum Senden von Daten an Brandschutzvorrichtungen (106, 206) eines Brandmeldesystems (100), umfassend:
Erzeugen eines Clusters (108, 208) durch eine Gateway-Vorrichtung (104, 204, 402), der eine bidirektionale Schleife von Brandschutzvorrichtungen (106, 206) aus einer Vielzahl von Brandschutzvorrichtungen (106, 206) einschließt, die in einem Netz (110) eingeschlossen sind, durch:
Empfangen von Signalstärken benachbarter Brandschutzvorrichtungen (106, 206) für jeden Brandschutzvorrichtung (106, 206) der Vielzahl von Brandschutzvorrichtungen (106, 206);
Bestimmen eines bestmöglichen Nachbarn für jede Brandschutzvorrichtung (106, 206) der Vielzahl von Brandschutzvorrichtungen (106, 206) basierend auf den Signalstärken;
Erzeugen eines Pfades, der die bidirektionale Schleife definiert; und
Zuweisen vorgegebener Zeitfenster über eine Vielzahl von Kanälen für jede Brandschutzvorrichtung (106, 206) der Vielzahl von Brandschutzvorrichtungen (106, 206) basierend auf einer Position der Gateway-Vorrichtung (104, 204, 402) in Bezug auf die bidirektionale Schleife;
Empfangen eines Aktivierungssignals durch die Gateway-Vorrichtung (104, 204, 402) von einer Brandmeldezentrale (102);
gleichzeitiges drahtloses Senden des Aktivierungssignals an die Vielzahl von Brandschutzvorrichtungen (106, 206) nach vorgegebenen Zeitfenstern über die Vielzahl von Kanälen durch die Gateway-Vorrichtung (104, 204, 402):
in einer ersten Richtung von der Gateway-Vorrichtung (104, 204, 404) über den Pfad rund um die bidirektionale Schleife; und
in einer zweiten Richtung von der Gateway-Vorrichtung (104, 204, 404) über den Pfad rund um die bidirektionale Schleife; und
Bewirken der Aktivierung mindestens einer Brandschutzvorrichtung (106, 206) der Vielzahl von Brandschutzvorrichtungen (106, 206) durch das Aktivierungssignal.

10. Verfahren nach Anspruch 9, wobei das Bestimmen des bestmöglichen Nachbarn das Bestimmen eines suboptimalen kürzesten Pfades über die Vielzahl von Brandschutzvorrichtungen (106, 206) in dem Cluster (108, 208) durch simulierte Wärmebehandlung einschließt, wobei der suboptimale kürzeste Pfad der Pfad ist.

11. Verfahren nach Anspruch 10, wobei der suboptimale kürzeste Pfad ein Hamiltonischer Pfad ist, der die bidirektionale Schleife definiert.

12. Verfahren nach Anspruch 9, wobei das Verfahren ferner das Erzeugen des Netzes (110) durch Verbinden jeder Brandschutzvorrichtung (106, 206) der Vielzahl von Brandschutzvorrichtungen (106, 206) mit einer benachbarten Brandschutzvorrichtung (106, 206) als Antwort darauf einschließt, dass es über vorgegebene Netz-(110)-kennungen, die in jeder Brandschutzvorrichtung (106, 206) der Vielzahl von Brandschutzvorrichtungen (106, 206) eingeschlossen sind, eingeschaltet wird.

13. Verfahren nach Anspruch 12, wobei das Erzeugen des Netzes (110) ferner das Ausrichten durch jede Brandschutzvorrichtung (106, 206) der Vielzahl von Brandschutzvorrichtungen (106, 206) mit dem Cluster (108, 208) über einen vorgegebenen Netzwerkschlüssel einschließt, der in jeder Brandschutzvorrichtung (106, 206) der Vielzahl von Brandschutzvorrichtungen (106, 206) eingeschlossen ist.

14. Verfahren nach Anspruch 9, wobei das Bewirken der Aktivierung der mindestens einen Brandschutzvorrichtung (106, 206) das Aktivieren eines visuellen Alarms einschließt.

15. Verfahren nach Anspruch 9, wobei das Bewirken der Aktivierung der mindestens einen Brandschutzvorrichtung (106, 206) das Aktivieren eines akustischen Alarms einschließt.

## Revendications

1. Dispositif passerelle (104, 204, 402) pour la transmission de données à des dispositifs d'incendie (106, 206) d'un système d'incendie (100), comprenant :
une mémoire (432) ; et
un processeur (430) configuré pour exécuter des instructions exécutables stockées dans la mémoire (432) pour :
générer un groupe (108, 208) incluant une boucle bidirectionnelle de dispositifs d'incendie (106, 206) à partir d'une pluralité de dispositifs d'incendie (106, 206) inclus dans un maillage (110) par :
la réception des intensités du signal des dispositifs d'incendie voisins (106, 206) pour chaque dispositif d'incendie (106, 206) de la pluralité de dispositifs d'incendie (106, 206) ;
la détermination d'un meilleur voisin possible pour chaque dispositif d'incendie (106, 206) de la pluralité de dispositifs d'incendie (106, 206) en fonction des intensités du signal ; et
la génération d'un chemin définissant la boucle bidirectionnelle ;
la réception d'un signal d'activation d'un panneau de commande d'incendie (102) ; et
la transmission sans fil du signal d'activation à la pluralité de dispositifs d'incendie (106, 206) inclus dans le groupe (108, 208) selon des créneaux temporels prédéterminés sur une pluralité de canaux ;
dans lequel :
le signal d'activation est envoyé simultanément :
dans une première direction depuis le dispositif passerelle (104, 204, 404) à travers le chemin autour de la boucle bidirectionnelle ; et
dans une deuxième direction depuis le dispositif passerelle (104, 204, 404) à travers le chemin autour de la boucle bidirectionnelle; et
la première direction est à l'opposé de la deuxième direction.

2. Dispositif passerelle (104, 204, 402) de la revendication 1, dans lequel le processeur (430) est configuré pour échelonner la transmission du signal d'activation sur la pluralité de canaux en :
la transmission du signal d'activation dans la première direction sur un premier canal au niveau d'un premier créneau temporel ;
la transmission du signal d'activation dans la deuxième direction sur un troisième canal au niveau d'un deuxième créneau temporel ;
la transmission du signal d'activation dans la première direction sur un deuxième canal au niveau d'un troisième créneau temporel ; et
la transmission du signal d'activation dans la deuxième direction sur un quatrième canal au niveau d'un quatrième créneau temporel.

3. Dispositif passerelle (104, 204, 402) de la revendication 2, dans lequel :
le premier canal est à une première fréquence et le troisième canal est à une troisième fréquence qui est proche de la première fréquence ; et
le deuxième canal est à une deuxième fréquence et le quatrième canal est à une quatrième fréquence qui est proche de la deuxième fréquence.

4. Dispositif passerelle (104, 204, 402) de la revendication 3, dans lequel la première fréquence et la troisième fréquence sont espacées de la deuxième fréquence et de la quatrième fréquence dans une bande de fréquences.

5. Dispositif passerelle (104, 204, 402) de la revendication 1, dans lequel le processeur (430) est configuré pour :
recevoir des données d'activation du dispositif d'incendie provenant d'un dispositif d'incendie (106, 206) de la pluralité de dispositifs d'incendie (106, 206) ;
transmettre les données d'activation du dispositif d'incendie au panneau de commande d'incendie (102) ; et
recevoir le signal d'activation du panneau de commande d'incendie (102) en réponse à la détermination par le panneau de commande d'incendie (102) qu'un événement d'incendie se produit à partir des données d'activation du dispositif d'incendie.

6. Dispositif passerelle (104, 204, 402) de la revendication 1, dans lequel le processeur (430) est configuré pour provoquer l'activation d'au moins un dispositif d'incendie (106, 206) parmi la pluralité de dispositifs d'incendie (106, 206) via le signal d'activation.

7. Dispositif passerelle (104, 204, 402) de la revendication 1, dans lequel le processeur (430) est configuré pour transmettre le signal d'activation à la pluralité de dispositifs d'incendie (106, 206) en transmettant le signal d'activation à un premier dispositif d'incendie (106, 206) de la pluralité de dispositifs d'incendie (106, 206) dans la première direction et un troisième dispositif d'incendie (106, 206) de la pluralité de dispositifs d'incendie (106, 206) dans la deuxième direction.

8. Dispositif passerelle (104, 204, 402) de la revendication 7, dans lequel :
la transmission du signal d'activation au premier dispositif d'incendie (106, 206) dans la première direction provoque le premier dispositif d'incendie (106, 206) à transmettre le signal d'activation à un deuxième dispositif d'incendie (106, 206) parmi la pluralité de dispositifs d'incendie (106, 206) et le deuxième dispositif d'incendie (106, 206) pour transmettre le signal d'activation au troisième dispositif d'incendie (106, 206) dans la première direction autour de la boucle bidirectionnelle ; et
la transmission du signal d'activation au troisième dispositif d'incendie (106, 206) dans la deuxième direction provoque le troisième dispositif d'incendie (106, 206) à transmettre le signal d'activation au deuxième dispositif d'incendie (106, 206) et au deuxième dispositif d'incendie (106, 206) pour transmettre le signal d'activation au premier dispositif incendie (106, 206) dans la deuxième direction autour de la boucle bidirectionnelle.

9. Procédé de transmission de données à des dispositifs d'incendie (106, 206) d'un système d'incendie (100), comprenant :
la génération, par un dispositif passerelle (104, 204, 402), d'un groupe (108, 208) incluant une boucle bidirectionnelle de dispositifs d'incendie (106, 206) à partir d'une pluralité de dispositifs d'incendie (106, 206) inclus dans un maillage (110) par :
la réception des intensités du signal des dispositifs d'incendie (106, 206) voisins pour chaque dispositif d'incendie (106, 206) de la pluralité de dispositifs d'incendie (106, 206) ;
la détermination d'un meilleur voisin possible pour chaque dispositif d'incendie (106, 206) de la pluralité de dispositifs d'incendie (106, 206) en fonction des intensités du signal ;
la génération d'un chemin définissant la boucle bidirectionnelle ; et
l'allocation des créneaux temporels prédéterminés sur une pluralité de canaux pour chaque dispositif d'incendie (106, 206) de la pluralité de dispositifs d'incendie (106, 206) en fonction d'une position du dispositif passerelle (104, 204, 402) par rapport à la boucle bidirectionnelle ;
la réception, par le dispositif passerelle (104, 204, 402) depuis un panneau de commande d'incendie (102), d'un signal d'activation ;
la transmission simultanée et sans fil, selon des créneaux temporels prédéterminés sur la pluralité de canaux par le dispositif passerelle (104, 204, 402), du signal d'activation à la pluralité de dispositifs incendie (106, 206) :
dans une première direction depuis le dispositif passerelle (104, 204, 404) à travers le chemin autour de la boucle bidirectionnelle ; et
dans une deuxième direction depuis le dispositif passerelle (104, 204, 404) à travers le chemin autour de la boucle bidirectionnelle; et
provoquant, par le signal d'activation, l'activation d'au moins un dispositif incendie (106, 206) de la pluralité de dispositifs incendie (106, 206).

10. Procédé de la revendication 9, dans lequel la détermination du meilleur voisin possible inclut la détermination du chemin sous-optimal le plus court à travers la pluralité de dispositifs d'incendie (106, 206) dans le groupe (108, 208) par recuit simulé, dans lequel le chemin sous-optimal le plus court est le chemin.

11. Procédé de la revendication 10, dans laquelle le chemin sous-optimal le plus court est un chemin hamiltonien définissant la boucle bidirectionnelle.

12. Procédé de la revendication 9, dans lequel le procédé inclut en outre la génération du maillage (110) par connexion, par chaque dispositif d'incendie (106, 206) de la pluralité de dispositifs d'incendie (106, 206), à un dispositif d'incendie (106, 206) voisin en réponse à une alimentation via des identifiants de maillage (110) prédéterminé inclus dans chaque dispositif d'incendie (106, 206) de la pluralité de dispositifs d'incendie (106, 206).

13. Procédé de la revendication 12, dans lequel la génération du maillage (110) inclut en outre l'alignement, par chaque dispositif d'incendie (106, 206) de la pluralité de dispositifs d'incendie (106, 206), sur le groupe (108, 208) via une clé de réseau prédéterminée incluse dans chaque dispositif d'incendie (106, 206) de la pluralité de dispositifs d'incendie (106, 206).

14. Procédé de la revendication 9, dans lequel provoquer l'activation d'au moins un dispositif d'incendie (106, 206) inclut l'activation d'une alarme visuelle.

15. Procédé de la revendication 9, dans lequel provoquer l'activation d'au moins un dispositif d'incendie (106, 206) inclut l'activation d'une alarme audible.
